# EUROPEAN PATENT SPECIFICATION

(11) **EP 0 380 202 B1**
(45) Date of publication and mention of the grant of the patent: **10.11.1993**
(21) Application number: 90300140.2
(22) Date of filing: 05.01.1990
(51) Int. Cl.: B65G 17/08

(54) **Apparatus and method to allow non-destructive removal of pivot rods in modular plastic conveyor belts**
Vorrichtung und Verfahren zum zerstörungsfreien Ausbau von Gelenkstäben aus modularen Kunststoff-Förderbändern
Dispositif et procédé pour démonter, sans les détériorer, des tiges articulées sur des courroies de transport en matière plastique modulaire

(30) Priority: 26.01.1989 US 302541; 26.01.1989 US 302542
(43) Date of publication of application: 01.08.1990
(73) Proprietor: The Laitram Corporation, Harahan Louisiana 70123 (US)
(72) Inventor: Lapeyre, James M., New Orleans, Louisiana 70115 (US)
(74) Representative: Ede, Eric

(56) References cited:
- EP-A- 0 032 797
- EP-A- 0 288 409
- US-A- 4 709 807

## Description

### TECHNICAL FIELD

This invention relates to a new and simple to manufacture conveyor belt modules which are pivotally connected by plastic pivot rods. More particularly this invention relates to such conveyor belts wherein the pivot rods are retained in assembled position without the need of forming "heads" on both ends of the pivot rods after the belt has been assembled. In addition, the pivot rods can be removed from the belt in a non-destructive manner and then reused. The modules are the type preferably formed by injection molding and which include first and second pluralities of pivot ends which are intermeshed with pivot ends of other modules and wherein the intermeshed pivot ends are held together by the pivot rods. In a preferred embodiment, the particular modules of this invention, are formed with resilient members which normally obstruct movement of the pivot rods through apertures formed in the intermeshed link ends, but can be resiliently forced aside during insertion and/or removal of the pivot rods.

### BACKGROUND

This application is a "Continuation-In-Part" of U.S. Application Serial No. 270,101 filed November 14, 1988, and entitled "Horizontal Flexing Conveyor Belt".

A typical modular conveyor belt is disclosed in U.S. Patent 3,870,141 issued to J.M. Lapeyre on March 11, 1975. According to this patent, substantially indentical modules formed by injection molding are pivotally connected to one another to form a conveyor belt of a desired length. Each module includes a plurality of elongated elements, and each elongated element has a first pivot end and a second pivot end. The plurality of elongated elements are joined together such that the apertures defined in each of the first and second pluralities of pivot ends lie along a first and second pivot axis respectively which are parallel one to the other. The link ends of one module are intermeshed and pivotally connected by means of a pivot rod to the link ends of another module until an entire belt having the desired length is formed. Injection molded plastic belts built according to the teachings of this patent have been well received by industry and have many uses.

U.S. Patent 4,051,949 issued on October 4, 1977 also to Lapeyre, solved the problem of removing small and/or unstable articles from a conveyor belt without tipping over. The belt provides for a multiplicity of channels formed in the modules which receive the "teeth" of a comb to receive the articles. The belt disclosed in U.S. Patent 4,171,045, also issued to Lapeyre, is similar to that described in US-A-3,870,141 and US-A-4,051,949 discussed above, except that selected ones of the vanes include a plurality of "dogs" which extend above the normal portion of the conveying surface to contact and push articles on the conveying surface along such that the belt will not slip underneath.

In a similar manner, U.S. Patent 4,213,527 issued June 22, 1980 to J. M. Lapeyre, et al, further discloses a module for forming a link conveyor belt which has ridges or flight members extending transverse to the direction of travel for preventing the conveyor belt from slipping under articles riding on the conveyor belt surface. Similarly US-A-4,170,281 issued on October 1979 and US-A-4,080,842 issued on March 22, 1978, both of Lapeyre, also show conveying belts having members extending transverse to the conveying surface for moving articles on the conveying surface along the belt such that the belt cannot slip underneath the article.

Other modular link conveyor belt US-Patent Applications or Patents by J M Lapeyre and/or owned by the same assignee as the present invention include Serial No. 483,210 entitled "Link Chain Belt" filed April 14, 1983, and Serial No. 179,523 entitled "Modular Center Drive Conveyor Belt" filed August 19, 1980. More specifically, US-Application Serial No. 118,309 which is a "Continuation" of Serial No. 179,523 is directed to a separate "stop" or abutment member which prevents the pivot rod from moving axially out of the intermeshed link ends. Another Lapeyre Patent is US-A-4,556,142 entitled "Lightweight Modular Conveyor Belt" issued December 3, 1985.

European Patent Application No. EP-A-0,032,797 discloses a conveyor belt formed of honeycomb-type modules connected together by transverse rods. The preamble of claim 1 is based on said prior art.

In addition, a US Patent Application entitled "End-to-End Molded Conveyor Belt Module" filed October 15, 1987 and having Serial No. 110,109 discloses modules which may be "end-to-end molded".

Another conveyor belt designed particularly for changing horizontal directions or flexing is disclosed in US Patents No. 4,153,152 and No. 4,184,588 also issued to J M Lapeyre on May 8, 1979 and January 22, 1980 respectively.

U.S. Patent 4,709,807 issued to Poerink on December 1, 1987 discloses the use of pegs and/or dowels as closing or "stop" devices which are inserted in the outboard sleeve type link ends to prevent the tranverse pivot rods from coming out.

In a similar manner, Maglio et al discloses in U.S. Patent 3,726,569 issued April 10, 1973, the use of various types of end plugs which either cut into or are received into the "sleeve" member to prevent the connecting rod from working its way out.

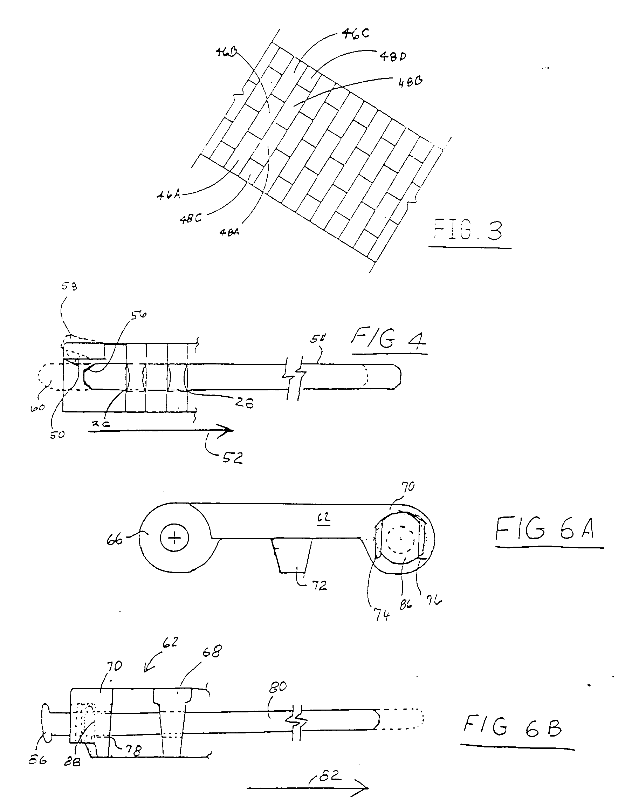

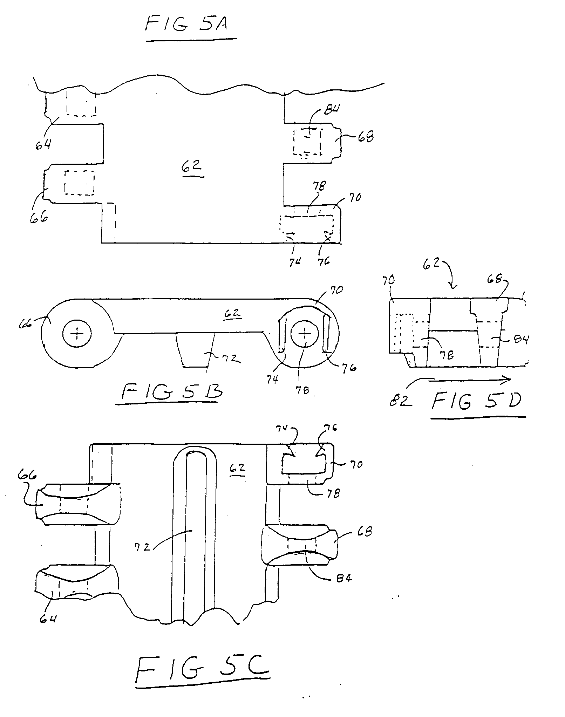

The "All-in-One"^{(R)} conveyor belt manufactured by the KVP Company in Sacramento, California and illustrated in Figure 4 of U.S. Patent 4,742,907 issued May 10, 1988 to Karl V. Palmaer, is a modular plastic belt driven at a central transverse connecting member which can be brick-layed, and therefore can be provided in different widths.

A plastic modular belt sold by the Cambridge Wire Cloth Company of Cambridge, Maryland under the name of Cam-Clean ^{(R)} and substantially described in U.S. Patent No. 4,557,374 issued on December 10, 1985 to Robert H. Bode is driven in the center area of a module by a sprocket tooth received by a recess in the module defined by a pair of transverse connecting members.

Finally, the Rexnord Corp. of Milwaukee, Wisconsin has recently introduced a group of plastic conveyor belts designated as the "5900" series which uses individual and separate snap-in plugs to retain "headless" pivot rods in position.

Thus, a review of the prior art patents and commercial belts as well as pending applications of the assignee of the present invention reveals that to date there has not been an easy, simple and inexpensive technique for maintaining the pivot rods in position in assembled modular conveying belts. Therefore, it is an object of this invention to provide conveyor belts wherein the modules can be easily repaired or disassembled without destruction of the pivot rod, and thereby allow reuse of the pivot rods.

It is another object of the present invention to provide a module for forming a conveyor belt which is modular and has the inherent capability of being easily repaired and replaced.

It is also an object of the present invention to provide a conveyor belt which is simple, easy, and inexpensive to construct and does not require separate "plugs" to retain the pivot rods in position.

### DISCLOSURE OF THE INVENTION

Other objects and advantages will be obvious, and will in part appear hereinafter and will be accomplished by one aspect of the present invention which provides a conveyor belt having the features indicated in claim 1.

In one preferred embodiment of this invention the first plurality of link ends are offset one link width with respect to the second plurality of link ends. The length of each module is determined by the distance between the first and second pivot axis, and the width of the module is determined by the number of link ends joined together by the centrally located connecting structure or member. Since the first and second pivot axes defined by the first and second pluralities of link ends are parallel, these axes lie in a common plane. The thickness of each of the pivot ends which surrounds the pivot axis is less than the spacing between adjacent pivot ends so that the pivot ends of one module may be intermeshed and connected with the pivot ends of another module by means of a pivot rod when the pivot axis of the two modules are aligned coaxially.

### BRIEF DESCRIPTION OF THE DRAWINGS

The above features of the present invention will be more clearly understood from consideration of the following description in connection with accompanying drawings in which:

Fig 1 is a perspective view of a plastic modular conveyor belt incorporating the features of this invention.

Fig 2A, 2B, 2C and 2D are top, side, bottom and front view respectively of the module of Fig 1.

Fig 3 is a diagrammatic sketch showing how the belt of this invention may be brick-layed to form a belt of any selected width.

Fig 4 is a front view similar to Fig 2D showing a "headless" pivot rod in place. Fig 5A, 5B, 5C and 5D are top, side, bottom and front views respectively of a different embodiment of a module incorporating the teachings of this invention.

Fig 6A and 6B are side and front views respectively which are similar to Figs 5B and 5D except they include a "headed" pivot rod snapped in place.

Fig 7A is a partially sectional top view of another embodiment of the present invention, particularly suitable for open area belts.

Fig. 7B is a side view of one of the modules of Fig. 7A.

Fig. 7C is a bottom view of a portion of one of the modules of Fig. 7A.

Fig. 8A is a perspective view of three intermeshed modules of another embodiment of the present invention.

Fig. 8B is a side view of a module of Fig. 8A.

Figs. 9A and 9B are top and side views respectively of another embodiment of the present invention.

Figs. 10, 11A, 11B and 11C show a perspective view, a side view, a front view and a top view respectively of another embodiment of this invention.

### BEST KNOWN MODE FOR PRACTICING THIS INVENTION

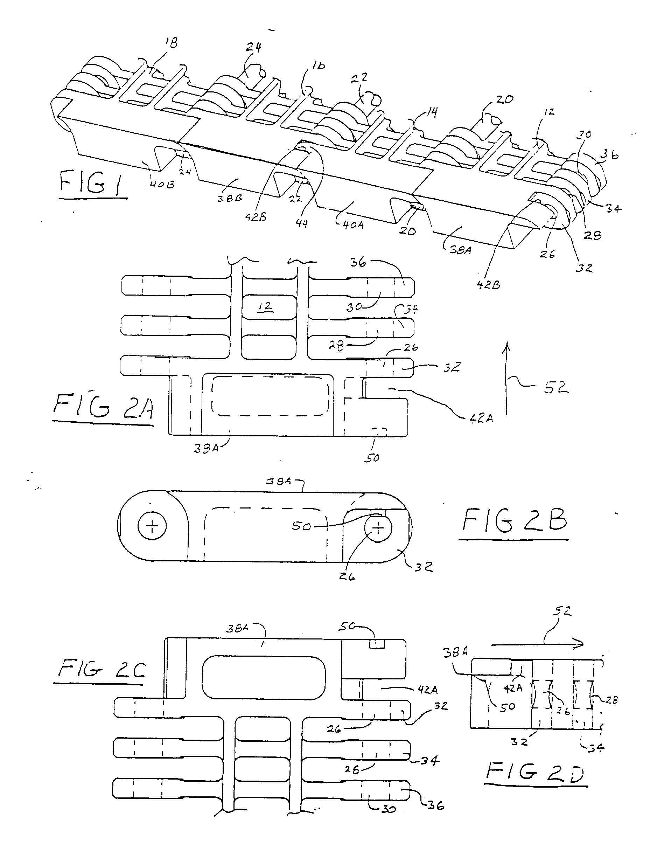

Referring now to Fig. 1, there is shown generally at 10 a section of a plastic modular conveyor belt which incorporates the features of this invention. Figs. 2A, 2B, 2C and 2D are various views of a module 12 of belt 10. As shown in Fig. 1, a series of modules 12, 14, 16 and 18 are pivotally connected or joined by means of pivot rods 20, 22 and 24 which extend through apertures such as apertures 26, 28 and 30 defined in the end of elongated links 32, 34 and 36 of module 12. The modules 12 through 18 as shown in Fig. 1 are illustrated with only three elongated links such as elongated links 32, 34 and 36 of module 12. However, it will be appreciated that a belt typically could be substantially wider than three elongated links, and each module could have a significantly larger number of elongated links such as for example on the order of twenty or more elongated links. Thus, fabrication of a belt by using modules already preassembled in this manner is substantially easier than if the links were not connected. It should also be noted that, although substantially similar, modules 14 and 18 are not exactly the same as modules 12 and 16. Specifically, the edges 38A and 38B of modules 12 and 16 are somewhat wider than edges 40A and 40B of module 14 and 18. Further edges 38A and 38B of modules 12 and 16 include spaces 42A and 42B to receive the link end of a pivotally connected module, such as link end 44 of module 14 is received by space 42B of module 16. The difference in thickness allows for a straight and smoother edge. Other than the space and increased thickness, modules 12 and 16 are the same as modules 14 and 18.

It will be understood by those skilled in the art that conveyor belts are required to be in all sizes of width and length, to accomplish various types of conveying needs. Consequently, it is hightly desirable that the belting system be made of modules or units which can be plaed together in an end-to-end and side-by-side relationship so as to form a belt of any width and length.

Fig. 3 illustrates how belts made of modules of the types discussed above may be made of identical modules having a single width along with a few partial or half modules so as to form a belt three modules wide but which also has substantially the strength of a single module across the belt. The strength of the belt is achieved as a result of the intermeshing and interlocking of the pivot ends. As shown, the full length modules 46A, 46B and 46C are simply laid side-by-side across the width of the belt. Each row on both sides of the row comprised of modules 46A, 46B and 46C include two full size rows such as modules 48A and 48B and two partial modules such as 48C and 48D. When this brick-layed pattern is continued for the length of the belt, the belt has substantially more strength across its width than it would without the brick-laying.

Referring again to Figs. 2A through 2D, there are shown the top, side, bottom and front views respectively of module 12 from Fig. 1. Although, the remaining discussion of this embodiment will be with reference to modules similar to module 12, it should be understood that the discussion is equally applicable to modules of the type bearing reference numbers 14 and 18. As shown, edge portion 38A which is integrally molded to elongated link 32 includes a stop member 50. As can be seen, stop member 50 extends from the top surface of edge 38A such that it partially obstructs aperture 26 which is defined in elongated link 32. Consequently, before a pivot rod can be inserted in the direction of arrow 52 through the aligned aperture of module 12, such as apertures 26, 28 and 30, and the apertures of the intermeshed link ends of another module, stop member 50, the pivot rod or both must be deformed or bent out of the path of the pivot rod. Fig. 4 is substantially the same as Fig. 2D, except it shows a pivot rod 54 having a diameter substantially the same size (although slightly smaller) in place within the apertures 26 and 28. As can be seen, the tip portion of stop member 50 would contact edge 56 of pivot rod 54 and prevent, or at least restrict, the movement of the pivot rod in the direction opposite of that indicated by arrow 52. The dotted lines 58 in Fig. 4 illustrate how the stop member 50 could allow pivot rod 54 to be forcefully inserted (or removed) by being deformed by the end of the pivot rod indicated by dotted lines 60.

Referring now to Figs. 5A, 5B, 5C, 5D, 6A and 6B, there are shown various views of another embodiment of the present invention on a different type of module indicated generaly at 62. As shown, link ends 64 and 66 on one side of the module are offset from the link ends 68 and 70 on the other side of the module by an amount equal to or slightly greater than the thickness of a link end. This amount of offset in the link ends makes the task of providing aligned edges of connected link ends much easier. As will be appreciated by those skilled in the art, a conveyor belt constructed from modules similar to module 62 will be center driven by applying a force orthogonal to cross-member 72, and will have a flush, smooth top. Also, as can be seen link end 70 includes two ramp shaped stop members 74 and 76 which obstruct aperture 78 formed in link end 70. Stop members 74 and 76 will freely allow a pivot rod 80 (Fig. 6B) to be inserted in the direction indicated by arrow 82 through apertures 78 and 84 in link ends 70 and 68 respectively as well as through apertures of intermeshed link ends from another module. However, as can be seen in Figs. 6A and 6B, stop members 74 and 76 will obstruct the passage of the head 86 such that these stop members must be deformed or bent out of position before head 86 can move past stop members 74 and 76 to the seated position indicated by dotted lines 88. And, as will be appreciated, once fully seated, head 86 and consequently the whole pivot rod 80 will be restricted from moving in a direction opposite that indicated by arrow 82 during normal operation of the belt. Of course the pivot rod 80 can be removed by either forcing head 86 past stop members 74 and 76 or by simply cutting head 86 from pivot rod 82.

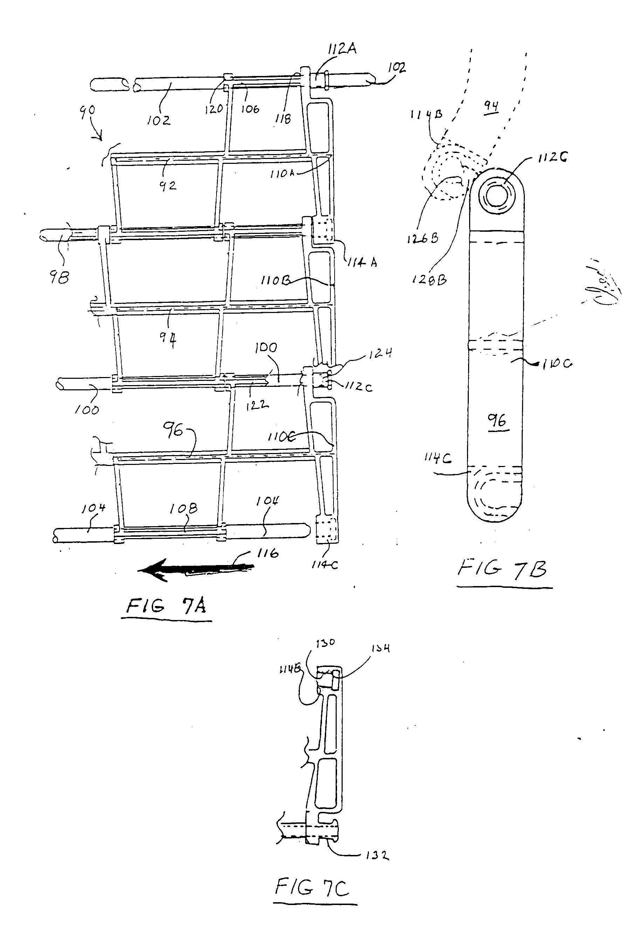

Referring now to Figs. 7A, 7B and 7C there is shown still another embodiment of the present invention incorporated into a module used in fabricating very light weight and open area conveyor belts, such as the portion of a conveyor belt indicated generally at 90. As shown, the belt 90 includes integrally molded modules 92, 94 and 96 typically connected by pivot rods 98 and 100. To aid in understanding this embodiment, pivot rods 102 and 104 are also shown in position in link ends 106 and 108 of modules 92 and 96 respectively, but are not shown as connecting other modules. As shown, edge members 110A, 110B and 110C are integrally molded to each module. Each edge member 110A, 110B and 110C includes a support structure such as sleeve portion 112A and 112C, and an obstruction abutment or stop member such as 114A and 114C. In the embodiment as shown, modules of belt 90 are assembled by inserting the pivot rod through the intermeshed link ends in a direction as indicated by arrow 116. However, as will become clear hereinafter, the stop member portion of a module edge must be deformed or bent out of the way to allow insertion of the pivot rod into and through the sleeve portion and the link ends. As shown, in Figs. 7A and 7B, the obstruction portion, abutment or stop member of a module edge is bent or deformed out of the usual position, and a rod such as rod 102 is passed through a sleeve and the link end, such as sleeve 112A and apertures 118 and 120 of link end 106, in the direction indicated by arrow 116. Once the rod is fully inserted in position, the stop member or abutment portion of the adjacent module returns to its normal or undeformed position surrounding the sleeve portion so as to prevent the rod from moving in a direction opposite that indicated by arrow 116. This is indicated by abutment or stop member portion 114A of module 92, surrounding the sleeve portion (not visible) of module 94 to prevent pivot rod 98 moving out of its connecting position. The broken out area of link end 122 of module 96 and dashed lines 124 show how pivot rod 100 may extend substantially to the end of sleeve 112C such that it would be almost in contact with the stop member portion (broken away and not shown) of edge 110B of module 94. On the other hand, it can be seen that the pivot rod may terminate well short of the abutment or stop member without detrimental effect as is indicated by pivot rod 104 and abutment or stop member 114C. Fig. 78 illustrates how the abutment or stop member portion 114B of module 94 may be bent out of the way of sleeve portion 112C of module 96, and how the obstruction, abutment or stop member portion 114B includes a keyhole shaped cut-out proving a passage 126B from the bottom-most edge portion 128B of edge 110B such that the obstruction or stop member portion 114B can snap around and surround the sleeve 112C when it returns to its normal and undeformed position. As can better be seen from the bottom view of Fig. 7C, the cylindrical receiving recess portion 130 indicated by dotted lines is substantially the same diameter, or somewhat greater than the diameter of the sleeve portion 132 of the same and other modules. The cut-out or passageway to the cylindrical portion, such as passageway 134 and passage 126B of module 94, however, is equal to or slightly less than the diameter of the sleeve 112C of module 96 such that the stop member portion 114B of module 94 snaps around and surrounds the sleeve portion 112C of a pivotally connected module 96. Thus, it can be seen that according to this embodiment, a smooth edge is provided and headless pivot rods are completely restrained from axial movement out of a connecting relationship without the use of separate or unattached plugs and/or obstructions.

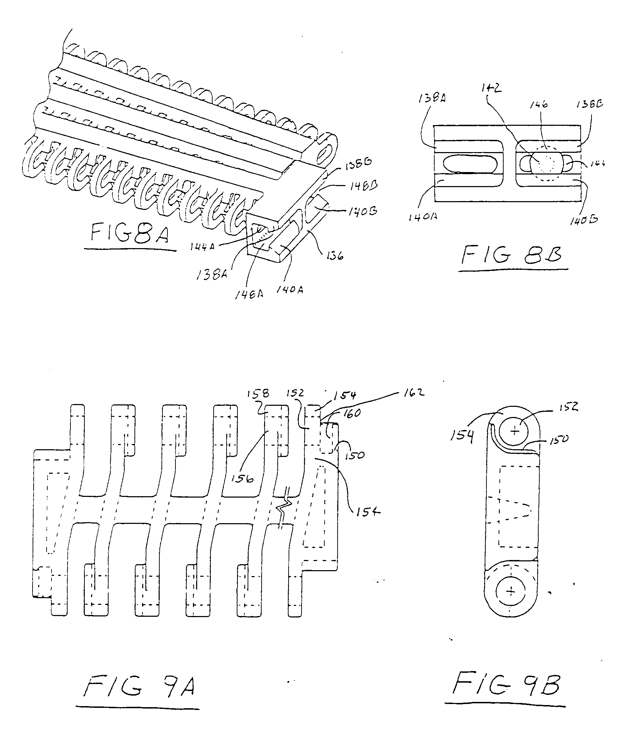

Referring now to Figs. 8A and 8B, there is another type of module which shows yet another embodiment of the present invention. As shown, the edge 136 of a selected module includes top ramp shaped abutments or stop members 138A and 138B, and bottom ramp shaped abutments or stop members 140A and 140B. As can also be seen, the body 142 of a pivot rod can easily pass the stop members 138B and 140B into aperture 144B, whereas the head 146 must be forced past stop members 138B and 140B so as to be seated in the gap 148A or 148B between the stop member and the edge portion defining aperture 144A and 144B. Once the head 146 is in position in gap 148B the pivot rod is substantially restricted from any axial movement.

Figs. 9A and 9B show top and side views of yet another embodiment of the invention. As shown, a curved ramp shaped abutment 150 will allow the passage of the body of a pivot rod into aperture 152 of side link 154 and on into and through the apertures defined in the link end such as aperture 156 in link end 158. However the enlarged head of a pivot rod must be forced past stop member 150 into the gap 160 between the surface 162 of side 154 and stop member 150. Once in place, the "headed" rod is restrained from any axial movement.

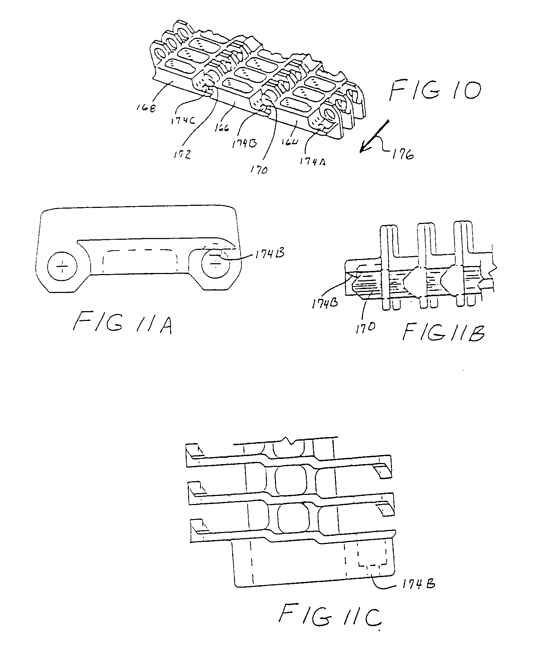

Figs. 10, 11A, 11B and 11C show yet another belt style incorporating the features of this invention. As shown, modules 164, 166 and 168 are pivotally connected by "headless" pivot rods 170 and 172. Also, as can be seen a ramp shaped abutment or stop member, such as stop members 174A, 174B and 174C, partially obstruct insertion of a pivot rod into the apertures of the link end in close proximity to the stop members. Thus, either the pivot rod, the abutment, or both must be deformed to allow the pivot rod to be inserted into the apertures of intermeshed link ends of two modules. Once in place, the abutment will restrict or inhibit axial movement of the pivot rod in a direction indicated by arrow 176 out of the apertures of the intermeshed link ends during normal operation. Of course, the pivot rods may be forced or pushed past the stop members. Figs. 11A, 11B and 11C show other views of the module 164.

## Claims

1. A conveyor belt having a plurality of conveyor modules (12, 14) pivotably connected end to end by means of pivot rods (20, 22) extending axially through apertures (26) in intermeshed link ends (32, 34, 36) on the end-to-end links (12, 14) and presenting at least two interconnecting links (12, 14) adjacent to one side (38A, 40A) of the belt with the apertures (26) accessible for inserting and removing the pivot rod (20), the
conveyor module (12), including retaining means (38A) for removably axially retaining a pivot rod (20) extending axially through a plurality of apertures (26) in the ends (32, 34, 36) of first and second respective links (12, 14) pivotably linked together end-to-end, said retaining means
having an integrally molded edge portion supporting structure (50, 94, 114B) on one of the first and second links defining each one side of the belt and comprising stop means (50) positioned in a belt assembly position for obstructing the apertures (26) to restrain the pivot rod (20) from moving out of the apertures (26),
wherein said edge portion supporting structure further comprises resiliently deflectable means (94, 114B) permitting the stop means (50) to move out of its position obstructing the apertures in the a belt assembly position so that the pivot rod (20) may be moved in and out of the apertures, characterized in that said resiliently deflectable means (94, 114B) further defines a cut-out (126B) which faces towards and at least partially surrounds the support structure (112C) of a pivotally connected module (110C).

2. The conveyor belt module of claim 1, wherein said pivot rod (20) is headless.

3. A conveyor module according to any one of the preceding claims wherein said resiliently deflectable means comprises a link end of a module.

4. A conveyor module according to claim 3, wherein said deformable link end of a module engages a further end-to-end module about the support structure (112C) through which pivot rod (100) axially passes.

## Patentansprüche

1. Förderband mit mehreren Förderbandmodulen (12, 14), die jeweils in einer End-zu-End-Verbindung mit Hilfe von Gelenkstangen (20, 22), die sich axial durch Öffnungen (26) in ineinander greifenden Verbindungsenden (32, 34, 36) an den End-zu-End-Verbindungen (12, 14) erstrecken, gelenkig verbunden sind und zumindest zwei Verbindungsglieder (12, 14) nahe einer Seite (38A, 40A) des Förderbandes darstellen, wobei die Öffnungen (26) zum Einführen und Entfernen der Gelenkstangen (20) zugänglich sind,
wobei das Fördermodul (12) eine Halteeinrichtung (38A) aufweist, um eine Gelenkstange (20), die sich axial durch mehrere Öffnungen (26) in den Enden (32, 34, 36) von entsprechenden ersten und zweiten, jeweils in einer End-zu-End-Verbindung gelenkig miteinander verbundenen Verbindungsgliedern (12, 14) erstreckt, axial entfernbar festzuhalten, und diese Halteeinrichtung eine einstückig geformte, im Randbereich liegende Stützstruktur (50, 94, 114B) an einem der beiden jeweils eine Seite des Förderbandes bildenden Verbindungsglieder und zudem Anschläge (50) aufweist, die bei zusammengesetztem Förderband die Öffnungen (26) abdecken, um die Gelenkstange (20) am Herausgleiten aus den Öffnungen (26) zu hindern,
wobei diese im Randbereich liegende Stützstruktur ferner elastisch biegbare Mittel (94, 114B) aufweist, die es dem Anschlag (50) erlauben, sich aus seiner die Öffnungen bei zusammengesetztem Förderband abdeckenden Position herauszubewegen, so daß die Gelenkstange (20) in die Öffnungen eingeschoben und aus diesen entfernt werden kann,
dadurch gekennzeichnet, daß die elastisch biegbaren Mittel (94, 114B) einen Ausschnitt (126B) begrenzen, der gegen die Stützstruktur (112C) eines schwenkbar verbundenen Modules (110C) gerichtet ist und dieses zumindest teilweise umgibt.

2. Förderbandmodul nach Anspruch 1, wobei die Gelenkstange (20) eine Gewindestange ist.

3. Förderbandmodul nach einem der vorhergehenden Ansprüche, wobei die elastisch biegbaren Mittel jeweils ein Verbindungsende eines Modules umfassen.

4. Förderbandmodul nach Anspruch 3, wobei das deformierbare Verbindungsende eines Modules in ein weiteres Modul in einer End-zu-End-Verbindung um die Stützstruktur (112C) eingreift, durch die die Gelenkstange (100) axial hindurchgeht.

## Revendications

1. Bande transporteuse comprenant une pluralité de modules transporteurs (12, 14) reliés bout à bout en pouvant pivoter au moyen de tiges d'articulation (20, 22) qui s'étendent axialement à travers des ouvertures (26) ménagées dans des extrémités d'articulations (32, 34, 36) emboîtées les unes dans les autres et présentes sur les articulations bout à bout (12, 14), et comprenant au moins deux maillons reliés entre eux (12, 14) qui sont contigus à un côté (38A, 40A) de la bande, les ouvertures (26) étant accessibles à l'insertion et à l'extraction de la tige d'articulation (20), cependant que le module transporteur (12) comprend des moyens de retenue (38A) pour retenir axialement de manière amovible une tige d'articulation (20) qui s'étend axialement à travers une pluralité d'ouvertures (26) ménagées dans les extrémités (32, 34, 36) d'un premier maillon correspondant et d'un deuxième (12, 14) qui sont articulés entre eux bout à bout en pivotement, lesdits moyens de retenue comprenant une structure (50, 94, 114B) qui supporte la partie du bord et qui est moulée d'un seul tenant sur l'un des premier et deuxième maillons définissant chacun un côté de la bande et comprenant un moyen d'arrêt (50) positionné dans une position de montage de la bande afin d'obturer les ouvertures (26) et d'empêcher la tige d'articulation (20) de sortir des ouvertures, dans laquelle ladite structure qui supporte la partie du bord comporte en outre des moyens (94, 114B) qui peuvent être défléchis élastiquement, qui permettent au moyen d'arrêt (50) de quitter sa position où il obture les ouvertures dans la position de montage de la bande, de sorte que l'on peut faire entrer et sortir la tige d'articulation (20) des ouvertures, caractérisée par le fait que lesdits moyens (94, 114B) qui peuvent être défléchis élastiquement définissent en outre une entaille (126B) qui est dirigée vers la structure de support (112C) d'un module (110C) relié en pivotement et qui l'entoure au moins partiellement.

2. Module de bande transporteuse selon la revendication 1, dans lequel ladite tige d'articulation (20) ne comporte pas de tête.

3. Module de transporteur selon l'une quelconque des revendications précédentes, dans lequel lesdits moyens qui peuvent être défléchis élastiquement comprennent une extrémité d'articulation d'un module.

4. Module de transporteur selon la revendication 1, dans lequel ladite extrémité de maillon déformable d'un module vient en prise bout à bout avec un autre module autour de la structure de support (112C) à travers laquelle la tige d'articulation (100) passe axialement.
